(19) Europäisches Patentamt
European Patent Office
Office européen des brevets

(11) EP 3 896 757 B1

(12) EUROPEAN PATENT SPECIFICATION

(45) Date of publication and mention
of the grant of the patent:
**22.11.2023 Bulletin 2023/47**

(21) Application number: **19909055.6**

(22) Date of filing: **17.12.2019**

(51) International Patent Classification (IPC):
H01M 4/134 (2010.01)    H01M 4/1395 (2010.01)
H01M 4/04 (2006.01)     H01M 4/36 (2006.01)
H01M 4/38 (2006.01)     H01M 4/62 (2006.01)
H01M 4/66 (2006.01)     H01M 10/052 (2010.01)
H01M 10/0525 (2010.01)  H01M 10/0585 (2010.01)
H01M 50/409 (2021.01)   H01M 4/02 (2006.01)

(52) Cooperative Patent Classification (CPC):
H01M 4/667; H01M 4/0404; H01M 4/043;
H01M 4/134; H01M 4/1395; H01M 4/366;
H01M 4/382; H01M 4/62; H01M 10/052;
H01M 10/0525; H01M 10/0585; H01M 50/409;
H01M 2004/021; H01M 2004/027;
H01M 2300/0068;                        (Cont.)

(86) International application number:
**PCT/CN2019/126010**

(87) International publication number:
**WO 2020/143413 (16.07.2020 Gazette 2020/29)**

(54) **ELECTRODE USED FOR IMPROVING BATTERY PERFORMANCE AND COMPRISING COMPOSITE LAYER WITH BRACKET STRUCTURE AND PROTECTIVE LAYER, AND BATTERY**

ELEKTRODE ZUR VERBESSERUNG DER BATTERIELEISTUNG MIT EINER VERBUNDSCHICHT MIT HALTERUNGSSTRUKTUR UND SCHUTZSCHICHT SOWIE BATTERIE

ÉLECTRODE UTILISÉE POUR AMÉLIORER LES PERFORMANCES DE BATTERIE ET COMPRENANT UNE COUCHE COMPOSITE DOTÉE D'UNE STRUCTURE DE SUPPORT ET D'UNE COUCHE DE PROTECTION, ET BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.01.2019 CN 201910016479**
**03.06.2019 US 201916430026**

(43) Date of publication of application:
**20.10.2021 Bulletin 2021/42**

(73) Proprietor: **Ningde Amperex Technology Ltd.**
**Ningde, Fujian 350900 (CN)**

(72) Inventors:
• **LI, Xiang**
  **Ningde, Fujian 350900 (CN)**
• **WANG, Bin**
  **Ningde, Fujian 350900 (CN)**
• **SHAO, Ying**
  **Ningde, Fujian 350900 (CN)**

(74) Representative: **Klunker IP**
**Patentanwälte PartG mbB**
**Destouchesstraße 68**
**80796 München (DE)**

(56) References cited:
**DE-A1-102015 108 488    US-A1- 2005 008 938**
**US-A1- 2015 295 246    US-A1- 2016 181 652**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
  H01M 2300/0082; Y02E 60/50

**Description**

**FIELD**

The present application is related generally to the field of energy storage devices, and in particular, to composite electrode for lithium ion batteries.

**BACKGROUND**

Mobile electronic devices and electric vehicles have emerged and become indispensable in people's daily life. As common energy devices that power the mobile electronic products, lithium ion batteries have multiple advantages such as high energy density (e.g., an amount of energy per volume), high power density (e.g., an amount of power per volume), high working voltage, and low self-discharge rate. Thus lithium ion batteries have been widely used in various electronic products, including mobile devices and electric vehicles.

Fast development and high performance demand in various electronic devices and electric vehicles require lithium ion batteries to retain high energy density after many charge-discharge cycles. However, because lithium metal is extremely active, lithium metal anodes can easily undergo a series of side reactions with the organic small molecules (e.g., carbonate esters, phosphate esters, and/or certain types of organic compounds including an ether group) in the electrolyte, resulting in undesirable consumptions of both lithium metal anode and electrolyte in a battery. As a result, the coulombic efficiency of the battery significantly reduces after many cycles.

In addition, conventional lithium ion batteries also pose safety concerns due to dendrite growth on the anode surface that may cause short circuit to the batteries. For example, when charging a battery including a lithium metal anode, lithium metal is deposited on the surface of the anode current collector. Because the current density may not be homogeneously distributed in the anode current collector, and the Li+ ions concentration may not be uniform in the electrolyte, lithium metal may be deposited faster on certain sites of the anode current collector than others, forming a sharp dendritic structure. Lithium dendrites can lead to significantly reduced deposition density when charging the battery, resulting in decreased energy density. Moreover, dendrites may pierce the separator in the battery to cause short circuit, resulting in serious safety problems.

Further, inhomogeneous lithium metal deposition in conventional lithium ion batteries suffer from drastic changes in anode thickness and battery volume. After many charge-discharge cycles, the battery volume change may cause separation of the anodes from other components in the battery, resulting in increased impedance, and even deformation of the battery.

DE 10 2015 108488 A1 discloses an anode 10 of a battery comprising a current collector, a porous scaffold in which lithium metal as active material is inserted, an insulating layer around the scaffold, a gasket and a sealing layer protective layer on top of the assembly. The insulation layer completely covers the composite layer.

CN 103700807 A discloses a current collector covered by a negative electrode active material layer and adjacent thereto by an insulation layer.

Accordingly, it would be desirable to have lithium ion batteries with improved structure and performance to solve at least the above mentioned problems and accommodate the need from the mobile electronic devices.

**SUMMARY**

According to an aspect of the present application, an electrode for a battery comprises a current collector having a first surface. The electrode further comprises a composite layer disposed in a first region on the first surface of the current collector. The composite layer has a first material with a scaffold structure and a second material mixed with the scaffold structure. The second material includes electrochemically active material for the battery. The electrode further comprises an insulation layer disposed in a second region surrounding the first region on the first surface of the current collector. The electrode further comprises a protection layer that covers the composite layer and the insulation layer on the first surface of the current collector.

According to another aspect of the present application, a battery comprises a double-sided anode including an anode current collector having a first surface and a second surface opposite to the first surface. Each of the first and second surfaces further comprises a composite layer disposed in a first region on a respective surface of the anode current collector. The composite layer has a first material with a scaffold structure and a second material mixed with the scaffold structure. The second material includes electrochemically active material for the battery. Each surface of the anode current collector further comprises an insulation layer disposed in a second region surrounding the first region on the respective surface of the anode current collector. Each surface of the anode current collector also comprises a protection layer that covers the composite layer and the insulation layer on the respective surface of the anode current collector. The battery further comprises a first single-sided cathode including a first cathode active material coated on one side of a first cathode current collector. The battery also comprises a first separator disposed between the first cathode active material on the side of the first cathode current collector and the protection layer on the first surface of the anode current collector. The battery further comprises a second single-sided cathode including a second cathode active material coated on one side of a second cathode current collector. Moreover, the battery comprises a second separator disposed between the second cathode active material on the side of the second cathode current collector and the protection layer on the second surface of the anode current collector.

According to yet another aspect of the present application, a battery comprises an anode including an anode current collector having a first surface. The anode also comprises a composite layer disposed in a first region on the first surface of the anode current collector. The composite layer has a first material with a scaffold structure and a second material mixed with the scaffold structure. The second material includes electrochemically active material for the battery. The anode further comprise an insulation layer disposed in a second region surrounding the first region on the first surface of the anode current collector. The anode also comprises a protection layer that covers the composite layer and the insulation layer on the first surface of the anode current collector. The battery also comprises a cathode including a cathode active material coated on a first surface of a cathode current collector. The battery further comprises a separator disposed between the cathode active material on the first surface of the cathode current collector and the protection layer on the first surface of the anode current collector.

## BRIEF DESCRIPTION OF THE DRAWINGS

The accompanying drawings, which are included to provide a further understanding of the embodiments and are incorporated herein and constitute a part of the specification, illustrate the described embodiments and together with the description serve to explain the underlying principles. Like reference numerals refer to corresponding parts.

Figure 1 is a cross-sectional view of a composite electrode of a lithium ion battery, in accordance with some embodiments.
Figure 2 is a top view of a composite electrode including a composite layer and an insulation layer for a lithium ion battery, in accordance with some embodiments.
Figure 3 is a top view of a composite electrode including a protection layer disposed on the composite layer and the insulation layer as discussed with reference to Figures 1-2, in accordance with some embodiments.
Figure 4 is a cross-sectional view of a double-sided composite electrode for a lithium ion battery that includes the composite electrodes as discussed with reference to Figure 1 disposed on both surfaces of the current collector, in accordance with some embodiments.
Figure 5 is a cross-sectional view of a lithium ion battery assembled using the double-sided composite electrode as discussed with reference to Figure 4, in accordance with some embodiments.

## DETAILED DESCRIPTION

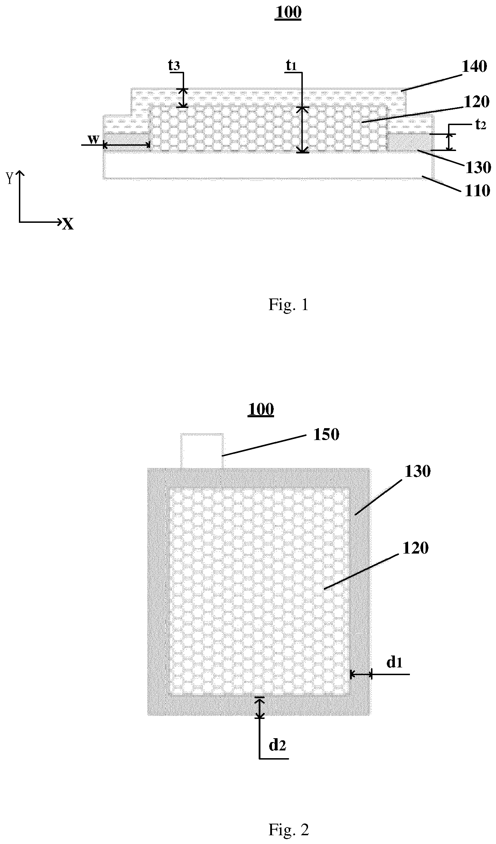

Figure 1 is a cross-sectional view of a composite electrode 100 of a lithium ion battery, in accordance with some embodiments. In some embodiment, the electrode 100 includes one or more layers disposed on a current collector 110. In some embodiments as shown in Figure 1, the composite electrode 100 includes a composite layer 120 disposed in a first region on a first surface of the current collector 110, and an insulation layer 130 disposed in a second region surrounding the first region on the first surface of the current collector 110. In some embodiments, the composite electrode 100 further includes a protection layer 140 that covers the composite layer 120 and the insulation layer 130 on the first surface of the current collector 110. In some embodiments, the first region includes a center region on the first surface of the current collector 110.

In some embodiments, the composite electrode 100 is an anode of the lithium ion battery, and the current collector 110 is an anode current collector. In some embodiments, the anode current collector comprises a copper (Cu) sheet.

In some embodiments, the composite layer 120 includes a scaffold structure mixed with an electrochemically active material that participates in the electrochemical reactions when charging and discharging the lithium ion battery. In some embodiments, the scaffold structure is made of a first material that is capable of conducting ions, such as $Li^+$ ions, to facilitate ion diffusion within the composite electrode 100 when charging and discharging the lithium ion battery. In some embodiments, an ionic conductivity of the first material that forms the scaffold structure is in a range from $10^{-2}$ S/cm to $10^{-8}$ S/cm. In some embodiments, the first material is an electronic insulation material (e.g., does not conduct electrons). In some embodiments, the first material is porous and has a porosity in a range from 30% to 85%. If the porosity of the first material is too high, the scaffold structure may not be strong and stable enough to support the electrochemically active material in the composite layer 120. In some embodiments, the first material is electrochemically active and may participate in the electrochemical reactions (e.g., may contribute to the capacity of the battery) when charging and discharging the lithium ion battery. In some embodiments, the first material is electrochemically inactive and does not participate in the electrochemical reaction of the lithium ion battery.

In some embodiments, the first material used to form the scaffold structure includes ionic conductive polymer materials, such as polyethylene oxide (PEO). In some embodiments, the first material comprises one or more monomers of one or more polymers including PEO and/or others polymers disclosed in the present disclosure. In some embodiments, the first material includes carbon-based material, such as porous carbon, carbon nanotubes, carbon fiber, or hollow carbon spheres. In some embodiments, the first material includes inorganic solid electrolyte material, such as lithium titanium phosphate ($Li_xTi_y(PO_4)_3$ ($0<x<2$, $0<y<3$)), lithium aluminum titanium phosphate ($Li_xAl_yTi_z(PO_4)_3$ ($0<x<2$, $0<y<1$, $0<z<3$)), $Li_{1+x+y}(Al,Ga)_x(Ti,Ge)_{2-x}Si_yP_{3-y}O_{12}$ ($0 \leq x \leq 1$, $0 \leq y \leq 1$), lithium strontium titanate ($Li_xLa_yTiO_3$ ($0<x<2$, $0<y<3$)), $Li_2O$-$Al_2O_3$-$SiO_2$-$P_2O_5$-$TiO_2$-$GeO_2$ ceramic materials, or garnet ceramic materials ($Li_{3+x}La_3M_2O_{12}$ ($0 \leq x \leq 5$, M is Te, Nb, or Zr)).

In some embodiments, the electrochemically active material of the composite layer 120 includes a second material different from the first material and mixed with the scaffold structure. In some embodiments, the second material provides $Li^+$ ions reduction/oxidation, $Li^+$ ions intercalation/de-intercalation, and/or $Li^+$ ions insertion/extraction when charging/discharging the lithium ion battery.

In some embodiments, the composite electrode 100 is an anode, and the second material for the anode (e.g., anode active materials) includes one material or a mixture of two or more materials selected from lithium metal (Li), carbon-based anode (e.g., graphite, graphene, carbon nanotubes, carbon nanowires, etc.), tin(Sn)-based anode (e.g., $SnO_2$, Sn-based composites, Sn-based compounds, Sn-based alloys), silicon(Si)-based anode (e.g., $SiO_2$, Si-based composites, Si-based compounds), titanium oxide ($TiO_2$), Ti-based alloys, and iron oxide ($Fe_2O_3$, $Fe_3O_4$, etc.).

In some embodiments, the composite layer 120 is formed by applying a pressure to the second material having certain fluidity (e.g., softened or molten metal) against the first material to homogeneously mix the second material with the scaffold structure. In some other embodiments, the second material can also be deposited onto surfaces of the scaffold structure. Other possible methods can also be used to homogeneously mix the second material with the scaffold structure. In some embodiments, the composite layer 120 has a thickness ("$t_1$" along Y direction in Figure 1) in a range from 10 $\mu$m to 200 $\mu$m.

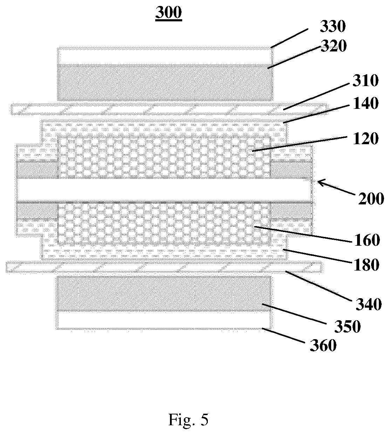

The composite layer including a scaffold structure mixed with electrochemically active materials can provide several benefits to the performance of the lithium ion battery. First, the scaffold structure provides extra space in the electrode to accommodate more $Li^+$ ions to diffuse into the internal space of the electrode, so as to avoid drastic volume change after many charging and discharging cycles and avoid the one or more layers detached from the current collector 110 or separator (e.g., separator 310 or 340, Figure 5). Second, scaffold-structured composite electrode has high surface area, and the electrochemically active material distributed on the surface of the scaffold structure can offer more $Li^+$ ions reduction/oxidation sites to reduce current density per area and hinder dendrite growths accumulated on certain local areas of the electrode surface. Third, the 3-dimensional scaffold structure offers diffusions of $Li^+$ ions along multiple directions, so as to increase the power density (e.g., with faster $Li^+$ ions diffusion and reduction/oxidation) and energy density (e.g., with more $Li^+$ ions reduction/oxidation sites and diffusion paths) of the battery compared to the one-dimensional moving paths in the conventional electrodes.

Figure 2 is a top view of the composite electrode 100 including the composite layer 120 and the insulation layer 130 surrounding the composite layer 120, in accordance with some embodiments. In some embodiments, the composite layer 120 is disposed in the first region of the current collector 110. In some embodiments, the first region includes a center region on the first surface of the current collector 110. In some embodiments, a distance (e.g., "$d_1$" or "$d_2$" in Figure 2) between an edge of the composite layer 120 and an edge of the current collector 110 (disposed below the insulation layer 130) is in a range from 0.5 mm (e.g., when the composite layer 120 has a larger area) to 50 mm (e.g., when the composite layer 120 has a smaller area). In some embodiments, the distance "$d_1$" or "$d_2$" in Figure 2 has a preferred range between 1.0 mm and 20.0 mm. In some embodiments, the distance "$d_1$" or "$d_2$" in Figure 2 has a preferred range between 1.0 mm and 5.0 mm. In some embodiments, the composite electrode 100 further includes a tab 150 (also referred to as "a terminal" or "a contact"). In one example, the tab 150 is attached to the current collector 110 of the composite electrode 100. In another example, the tab 150 is a part of the current collector 110 and preserved from the metal sheet when cutting the current collector 110 out from the metal sheet.

In some embodiments, the insulation layer 130 is disposed along the edges (e.g., the insulation layer 130 covers the regions on the surface and near the edges as shown in Figure 2) of the current collector 110. In some embodiments, the insulation layer 130 covers any place on the first surface of the current collector 110 that is not covered by the composite layer 120 (e.g., the insulation layer 130 is disposed immediately adjacent to the composite layer 120). In some embodiments, a gap (not shown) exists between the composite layer 120 and the insulation layer 130. In some embodiments, the insulation layers 130 extends from the first surface of the current collector 110 to a second surface of the current collector 110 opposite to the first surface, and covers the cross sectional edges (not shown) of the current collector 110. In some embodiments, the insulation layer 130 has a width ("w" along X direction in Figure 1) in a range from 0.5 mm to 10 mm. In some preferred embodiments, the width w of the insulation layer 130 is in a range from 0.7 mm to 7.0 mm. In some preferred embodiments, the width w of the insulation layer 130 is in a range from 1.0 mm to 5.0 mm. In some embodiments, when there is a gap between the composite layer 120 and the insulation layer 130, the width of the insulation layer 130 is shorter than the distance (e.g., "$d_1$" or "$d_2$" in Figure 2) between the edge of the composite layer 120 and the edge of the current collector 110. In some embodiments, when there is no gap between the composite layer 120 and the insulation layer 130, the width of the insulation layer 130 has the same value as the distance (e.g., "$d_1$" or "$d_2$" in Figure 2) between the edge of the composite layer 120 and the edge of the current collector 110.

In some embodiments, the insulation layer 130 has a thickness ("$t_2$" along Y direction in Figure 1) in a range from 5 $\mu$m to 60 $\mu$m. In some embodiments as illustrated in Figure 1, the composite layer 120 is thicker than the insulation layer 130. In some other embodiments, the composite layer 120 has the same thickness than the insulation layer 130. In some other embodiments, the composite layer 120 is thinner than the insulation layer 130.

In some embodiments, the insulation layer 130 comprises electronic insulating and ionic insulating material, i.e., the insulation layer 130 does not conduct electrons or ions. In some embodiments, the materials used in the insulation layer 130 has a resistivity in a range from $10^7$ $\Omega \cdot$m to $10^{22}$ $\Omega \cdot$m. In some preferred embodiments, the resistivity of the materials used in the insulation layer is in a range from $10^{10}$ $\Omega \cdot$m to $10^{22}$ $\Omega \cdot$m. In some embodiments, the insulation layer 130 is configured to confine the Li$^+$ ions diffusion and Li$^+$ ions reduction/oxidation within a range defined by the insulation layer 130. That is, the Li$^+$ ions diffusion and Li$^+$ ions reduction/oxidation do not take place outside the region enclosed by the insulation layer 130. In some embodiments, the insulation layer 130 covers the edges of the current collector 110 and further extends from the first surface to the second opposing surface of the current collector 110 to cover the cross sectional edges of the current collector 110. The insulation layer 130 as disclosed herein can effectively prevent the direct contact between current collector 110 and protection layers 140, so that electrons conducted within the current collector 110 cannot directly contact or react with (e.g., reduce) Li$^+$ ions diffused within the protection layers 140. Instead, Li$^+$ ions can only be reduced to Li metal in the composite layer 120. Therefore, the insulation layer 130 further defines/confines the region where Li$^+$ ions can meet electrons to have redox reactions. The insulation layer 130 prevents Li metal from depositing on the insulation layer 130 or the protection layers when charging and discharging the battery.

In some embodiments, the insulation layer 130 comprises polymer or inorganic insulation materials. In some embodiments, the insulation layer 130 comprises one or more polymer insulation materials such as polyimide, polyvinyl fluoride, polyether ether ketone (PEEK), polyester, polyethylene, polypropylene, polyvinylidene chloride, polytetrafluoroethylene (PTFE), and/or polyethylene terephthalate (PET). In some embodiments, the insulation layer 130 comprises one or more inorganic ceramic materials such as alumina ($Al_2O_3$), aluminum hydroxide ($Al(OH)_3$), and/or boron nitride (BN).

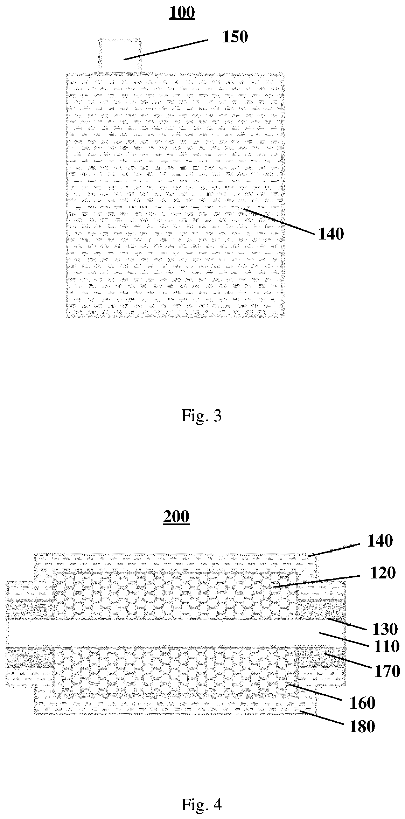

Figure 3 is a top view of the composite electrode 100 including one or more protection layers 140 (shown as one component 140 in Figure 1) disposed on the composite layer 120 and the insulation layer 130 as discussed with reference to Figures 1-2, in accordance with some embodiments. In some embodiments, the one or more protection layers 140 comprise materials that conduct Li$^+$ ions to facilitate Li$^+$ ions diffusion into and out of the anode. In some embodiments, the one or more protection layers 140 can effectively block or significantly reduce the passage of electrolyte into the composite layer 120 of the anode, so as to reduce the contact between lithium metal anode and electrolyte to avoid side reactions and increase the coulombic efficiency of the battery. In some embodiments, the one or more protection layers 140 can block the dendrites from extending beyond the anode to damage other components (e.g., separator) of the battery.

In some embodiments, the one or more protection layers 140 are ionic conductive while electronic insulating. In some embodiments, the ionic conductivity of the materials of the protection layers 140 is in a range from $10^{-2}$ S/cm to $10^{-8}$ S/cm. In some embodiments, the protection layers 140 are electrochemically inactive.

In some embodiments, the one or more protection layers 140 completely covers the composite layer 120, the insulation layer 130, and any gap between the composite layer 120 and the insulation layer 130. In some embodiments, an overlapped region between the one or more protection layers 140 and the insulation layer 130 has a width (e.g., a dimension along X direction in Figure 1) in a range from 0.5 mm to 10 mm. In some embodiments, the one or more protection layers 140 have a thickness ("$t_3$" along Y direction in Figure 1) in a range from 0.1 $\mu$m to 30 $\mu$m. If the protection layers 140 are too thin, they may not be able to sufficiently inhibit the dendrite growth and prevent the dendrites from damaging other components (e.g., separator) of the battery. If the protection layers 140 are too thick, ionic conductivity of the protection layers 140 may be compromised and Li$^+$ ions diffusion between the anode and the electrolyte may be hindered, which may increase the battery impedance and negatively impact the battery performance.

In some embodiments as illustrated in Figure 1, when the composite layer 120 is thicker than the insulation layer 130, the one or more protection layers 140 disposed on top of the composite layer 120 and the insulation layer 130 have a stepped top surface (e.g., convex, protruding outward away from the current collector 110) that conforms to the contour of the top surfaces of the composite layer 120 and the insulation layer 130, instead of a flat top surface. In some embodiments, when the composite layer 120 has the same thickness with the insulation layer 130, the one or more protection layers 140 have a flat top surface. In some other embodiments, when the composite layer 120 is thinner than the insulation layer 130, the one or more protection layers 140 have a stepped top surface (e.g., concave, protruding inward toward the current collector 110).

In some embodiments, the protection layers 140 have a porosity lower than 5%. In some embodiments, any pore in the protection layers 140 has a diameter that is smaller than 1 $\mu$m. The protection layers have low porosity and small pore size to effectively block or significantly reduce the passage of electrolyte into the anode, so as to reduce the side reactions between lithium metal anode and molecules in the electrolyte, and increase the coulombic efficiency of the battery.

In some embodiments, the one or more protection layers 140 comprise one or more polymer materials (e.g., ionic conductive polymer materials), such as polyvinylidene fluoride-hexafluoropropylene (PVDF-HFP), polyvinylidene fluoride (PVDF), polyacrylonitrile (PAN), polymethyl methacrylate (PMMA), poly(p-phenylene oxide) (PPO), polyphenylene ether (PPE), polypropylene carbonate (PPC), and/or polyethylene oxide (PEO). In some embodiments, the one or more protection layers 140 comprise one or more monomers of the above listed polymers and/or other polymers as disclosed in the present disclosure. In some embodiments, the one or more protection layers 140 comprise inorganic ceramic materials, such as $HfO_2$, $SrTiO_3$, $SnO_2$, $CeO_2$, MgO, NiO, CaO, BaO, ZnO, $ZrO_2$, $Y_2O_3$, $Al_2O_3$, $TiO_2$, and/or $SiO_2$. In some preferred embodiments, the one or more protection layers 140 preferably comprise materials that are good Li$^+$ ions conductors, such as lithium phosphate ($Li_3PO_4$), lithium titanium phosphate ($Li_xTi_y(PO_4)_3$ (0<x<2, 0<y<3)), lithium aluminum titanium phosphate ($Li_xAl_yTi_z(PO_4)_3$ (0<x<2, 0<y<1, 0<z<3)),
$Li_{1+x+y}(Al,Ga)_x(Ti,Ge)_{2-x}Si_yP_{3-y}O_{12}$ ($0 \leq x \leq 1$, and $0 \leq y \leq 1$), lithium strontium titanate ($Li_xLa_yTiO_3$ (0<x<2, 0<y<3), lithium bismuth thiophosphate ($Li_xGe_yP_zS$, 0<x<4, 0<y<1, 0<z<1or 0<w<5), lithium nitride ($Li_xN_y$, 0<x<4, 0<y<2), $SiS_2$ glass ($Li_xSi_yS_z$, $0 \leq x < 3$, 0<y<2, 0<z<4), P2S5 glass (LixPySz, $0 \leq x < 3$, 0<y<3, 0<z<7), $Li_2O$, LiF, LiOH, $Li_2CO_3$, $LiAlO_2$, $Li_2O$-$Al_2O_3$-$SiO_2$-$P_2O_5$-$TiO_2$-$GeO_2$ ceramics, and/or garnet ceramics ($Li_{3+x}La_3M_2O_{12}$, $0 \leq x \leq 5$, and M is one or more selected from Te, Nb, and Zr).

In some embodiments, the one or more protection layers 140 are attached to the upper surfaces of the insulation layer 130 and the composite layer 120 by hot pressing. In some embodiments, a temperature used for hot pressing is selected to be the lower one between the respective melting temperatures of the separator and the insulation layer 130 in the battery, and a pressure is between 0.1 Mpa and 2 Mpa. In some other embodiments, the insulation layer 130, the composite layer 120, and the one or more protection layers 140 are bound by one or more binder materials, such as polyamide, polyurethane, ethylene-vinyl acetate (EVA), ethylene vinyl alcohol (EVOH), acrylate, and/or polyvinylidene fluoride or polyvinylidene difluoride (PVDF). In some other embodiments, the one or more protection layers 140 are directly deposited on the upper surfaces of the insulation layer 130 and the composite layer 120 without using any binder materials (e.g., using any suitable chemical deposition method or physical deposition method). After forming the protection layers 140 on the composite layer 120, an upper portion of the scaffold structure in the composite layer 120 penetrates into the protection layers 140 for a depth (along Y direction in Figure 1) of 0.1 $\mu$m to 30 $\mu$m, so as to provide improved binding strength between the composite layer 120 and the protection layers 140.

Figure 4 is a cross-sectional view of a double-sided composite electrode 200 for a lithium ion battery that includes the composite electrodes 100 as discussed with reference to Figures 1-3 disposed on both surfaces of the current collector 110, in accordance with some embodiments. In some embodiments, the double-sided composite electrode 200 is a double-sided anode that includes an anode current collector 110, a first composite layer 120 disposed on a first surface of the current collector 110, a first insulation layer 130 disposed along the edges of the current collector 110 and surrounding the first composite layer 120 on the first surface, and one or more first protection layers 140 disposed on the first composite layer 120 and the first insulation layer 130. In some embodiments, the composite electrode 200 further includes a second composite layer 160 disposed on a second surface opposite to the first surface of the current collector 110, a second insulation layer 170 disposed along the edges of the current collector 110 and surrounding the second composite layer 160, and one or more second protection layers 180 disposed on the second composite layer 160 and the second insulation layer 170. In some embodiments, the first composite layer 120 and the second composite layer 160 of the double-sided composite electrode 200 are substantially the same as the composite layer 120 as discussed with reference to Figures 1-3. In some embodiments, the first insulation layer 130 and the second insulation layer 170 of the double-sided composite electrode 200 are substantially the same as the insulation layer 130 as discussed with reference to Figures 1-3. In some embodiments, the one or more first protection layers 140 and the one or more second protection layers 180 of the double-sided composite electrode 200 are substantially the same as the one or more protection layers 140 as discussed with reference to Figures 1-3.

Figure 5 is a cross-sectional view of a lithium ion battery 300 assembled using the double-sided composite electrode 200 as discussed with reference to Figure 4, in accordance with some embodiments. For example, lithium ion battery 300 includes the double-sided composite anode 200. A first cathode layer 320 disposed on a first cathode current collector 330 faces the first surface of the anode 200. A first separator 310 is disposed between the first cathode layer 320 and the first surface (e.g., the one or more first protection layers 140) of the anode 200. A second cathode layer 350 disposed on a second cathode current collector 360 faces the second surface of the anode 200. A second separator 340 is disposed between the second cathode layer 350 and the second surface (e.g., the one or more second protection layers 180) of the anode 200.

In some embodiments, the respective electrochemically active regions of the cathode layer 320 and the anode composite layer 120 have the same area and directly face each other, and the respective electrochemically active regions of the cathode layer 350 and the anode composite layer 160 have the same area and directly face each other. In some other embodiments, the cathode layer 320 has a larger electrochemically active area than that of the anode composite layer 120, and the cathode layer 350 has a larger electrochemically active area than that of the anode composite layer 160. In some other embodiments, the cathode layer 320 has a smaller electrochemically active area than that of the anode composite layer 120, and the cathode layer 350 has a smaller electrochemically active area than that of the anode composite layer 160.

In some embodiments, a respective separator of the first separator 310 and the second separator 340 comprises one or more materials selected from polyethylene, polypropylene, polyethylene terephthalate, polyimide, and aramid. For example, polyethylene for the separator can be high-density polyethylene, low-density polyethylene, or polyethylene with ultra-high molecular weight. Polyethylene separator and polypropylene separator can effectively prevent short-circuit between the cathode current collector and the anode current collector and thus improve stability and cyclability of the battery. In some embodiments, one or both surfaces of the separator are porous, and the porous layer may include inorganic particles and binders. In some embodiments, the inorganic particles include one or more inorganic compounds selected from aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), cerium oxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, and barium sulfate. In some embodiments, the binders include one or more types of materials selected from polyvinylidene fluoride, vinylidene fluoride-hexafluoropropylene copolymer, polyamide, polyacrylonitrile, polyacrylate, polyacrylic acid, polyacrylate, carboxymethylcellulose sodium, polyvinyl pyrrolidone, polyethylene, polymethylmethacrylate, polytetrafluoroethylene, and polyhexafluoropropylene. The porous surface can improve thermal resistance and oxidation resistance of the separator. The porous surface can also have an improved electrolyte infiltration effect to provide a better contact between the separator and the cathode and anode.

In some embodiments, a respective cathode of the first cathode layer 320 and the second cathode layer 350 comprises a material or a mixture of two or more materials selected from $LiCoO_2$, $LiNiO_2$, $LiMn_2O_4$, $LiFePO_4$, $LiMnPO_4$, $LiCoPO_4$, $Li_2M_xMn_{4-x}O_8$ (M = Fe, Co), $MnO_2$, $V_2O_5$, $TiS_2$, and $MoS_2$. In some embodiments, the compatibilities of working voltages and chemistry between the cathode and the anode may also be considered when selecting the cathode active material for the lithium ion battery 300. In some embodiments, the cathode active materials have various particle shapes, such as nanoparticles, nanotubes, nanopowders, nanoballs, nanoflakes, nanowires, etc. In some embodiments, the active material is mixed with additives and binders to form a paste which is then coated on the cathode current collector to form a cathode. In some other embodiments, the active material can be deposited onto the cathode current collector using any suitable method, such as chemical vapour deposition (CVD), physical vapour deposition (PVD), pulsed laser deposition (PLD), magnetron sputtering deposition, electrochemical depo, epitaxial growth, spin coating method, etc.

In some embodiments, a respective current collector of the first cathode current collector 330 and the second cathode current collector 360 comprises an aluminium (Al) sheet.

In some embodiments, the battery 300 includes an electrolyte (not shown) disposed between the cathode and the anode. In some embodiments, the battery 140 can use a liquid electrolyte, a gel electrolyte, or a solid electrolyte. The liquid electrolyte can be one or more lithium-based salts selected from $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBO and LIODFB dissolved in a nonaqueous solvent.

In some embodiments, the nonaqueous solvent includes a carbonate ester compound, a carboxylic acid compound, an ether compound, other suitable organic solvent, or a combination thereof. In some embodiments, the carbonate ester compound may be a chain carbonate compound, a cyclic carbonate compound, a fluorocarbonate compound, or a combination thereof. Examples of chain carbonate compounds include diethyl carbonate (DEC), dimethyl carbonate (DMC), dipropyl carbonate (DPC), methylpropyl carbonate (MPC), ethylene carbonate (EPC), carbonic acid ethyl acetate (MEC), and combinations thereof. Examples of cyclic carbonate compounds include ethylene carbonate (EC), propylene carbonate (PC), butylene carbonate (BC), vinyl ethylene carbonate (VEC), and combinations thereof. Examples of fluorocarbonate compounds include fluoroethylene carbonate (FEC), 1,2-difluoroethylene carbonate, 1,1-difluoroethylene carbonate, and 1,1,2-tricarboxylic acid, fluoroethylene, 1,1,2,2-tetrafluoroethylene carbonate, 1-fluoro-2-methylethyl carbonate, 1-fluoro-1-methyl-ethylene carbonate, carbonic acid 1,2 - Difluoro-1-methylethylene, 1,1,2-trifluoro-2-methylethyl carbonate, trifluoromethyl ethylene carbonate, and combinations thereof. Examples of carboxylic acid ester compounds include methyl acetate, ethyl acetate, n-propyl acetate, tert-butyl acetate, methyl propionate, ethyl propionate, γ-butyrolactone, terpene lactone, valerolactone, DL-mevalonic acid lactone, caprolactone, methyl formate, and combinations thereof. Examples of ether compounds include dibutyl ether, tetraethylene glycol dimethyl ether, diethylene glycol dimethyl ether, 1,2-dimethoxyethane, 1,2-diethoxyethane, and Ethoxymethoxyethane, 2-methyltetrahydrofuran, tetrahydrofuran, and combinations thereof. Examples of other organic solvents include dimethyl sulfoxide, 1,2-dioxolane, sulfolane, methyl sulfolane, 1,3-dimethyl-2-imidazolidinone, N-methyl-2-pyrrolidone, Formamide, dimethylformamide, acetonitrile, trimethyl phosphate, triethyl phosphate, trioctyl phosphate, phosphate esters, and combinations thereof.

In some embodiments, the lithium ion battery 300 is packaged using packaging material (not shown) that includes three layers. In some embodiments, the inner layer (closest to the electrodes) is made of a polymer material such as polypropylene. The outer layer may be made of a polymer material such as nylon. In some embodiments, the middle layer disposed between the inner layer and the outer layer is a metal layer, such as an aluminum (Al) or a stainless steel sheet.

The following embodiments are various examples of preparing lithium ion batteries using the electrode structures discussed with reference to Figures 1-5. The electrochemical performance of these lithium ion batteries are further compared and discussed.

**[Embodiment 1]**

**(1) Preparation of Anode**

An anode current collector (e.g., the current collector 110, Figure 1) having a dimension of 40 mm × 60 mm is made by punching or cutting from a copper metal sheet. Then, a thin film comprising nanofibers is formed in a first region of the anode current collector (e.g., as illustrated in Figure 2) using an electrospinning method. In some embodiments, the first region includes a center region of the anode current collector. In some embodiments, the thin film of nanofibers has a thickness of 80 $\mu$m, an area of 38 mm × 58 mm, and a porosity of 85%. In some embodiments, the nanofibers comprise polyethylene oxide (PEO) mixed with 10% lithium difluoromethanesulfonimide (LiTFSI). In some embodiments, the nanofibers in the thin film function as the scaffold structure in the composite layer 120 of the anode as discussed with reference to Figure 1.

Next, a lithium metal foil with an area of 38 mm × 58 mm and a thickness of 20 $\mu$m is placed on the thin film of nanofibers. A pressure of 0.1 MPa is applied to press the lithium metal foil towards the thin film of nanofibers and held for 5 seconds, to obtain a mixed composite layer (e.g., the composite layer 120, Figure 1) that has a scaffold structure supporting Li metal in the anode.

Next, an insulation layer (e.g., the insulation layer 130, Figures 1-2) comprising polypropylene (PP) is formed along the four edges of the anode current collector surrounding the composite layer as shown in Figure 2. In some embodiments, the insulation layer is 1.5 mm wide (e.g., "w" in Figure 1) and 30 $\mu$m thick. The anode including the Cu current collector, the composite layer, and the insulation layer is then placed in a drying oven at 60 °C for 1 hour.

Next, a lithium phosphorous oxynitride (LiPON) layer (e.g., as the protection layer 140, Figures 1 and 3) is deposited by magnetron sputtering to completely cover an entire surface of the anode current collector, including the composite layer, the insulation layer, and any gap between the composite layer and the insulation layer. In some embodiments, the thickness of the LiPON layer is 3 $\mu$m, and the porosity of the LiPON layer is 0.1%. A single-sided anode sheet as shown in Figure 1 can be obtained. Next, similar steps can be used to form the composite layer, the insulation layer, and the protection layer on the opposite surface of the anode current collector to obtain a double-sided anode sheet as shown in Figure 4.

**(2) Preparation of Cathode**

Cathode is formed by mixing cathode active material lithium cobalt oxide (LiCoO$_2$), carbon conductive additive carbon black, and binders polyvinylidene fluoride (PVDF) according to a weight ratio of 97.5 : 1.0 : 1.5, and adding solvent N-methylpyrrolidone (NMP) to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm × 58 mm dimensions to be used as cathodes (e.g., Figure 5) for lithium ion batteries.

**(3) Preparation of Electrolyte**

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

**(4) Preparation of a Lithium Ion Battery**

To form a lithium ion battery as shown in Figure 5, the double-sided anode (or negative electrode, as prepared in Embodiment 1 step (1)) is placed in the middle, and two single-sided cathodes (or positive electrode, as prepared in Embodiment 1 step (2)) are disposed on two opposite sides of the anode respectively. A polyethylene (PE) film with a thickness of 15 μm is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Embodiment 1 step (3) is injected into the battery. The electrolyte-soaked battery is further sealed and packaged to obtain a laminated lithium metal battery (or a laminated lithium ion battery).

## [Embodiment 2]

### (1) Preparation of Anode

An anode current collector (e.g., the current collector 110, Figure 1) having a dimension of 40 mm × 60 mm is made by punching or cutting from a copper metal sheet. Then, a thin film comprising nanofibers is formed in a first region of the anode current collector (e.g., as illustrated in Figure 2) using an electrospinning method. In some embodiments, the first region includes a center region of the anode current collector. In some embodiments, the thin film of nanofibers has a thickness of 80 μm, an area of 38 mm × 58 mm, and a porosity of 60%. In some embodiments, the nanofibers comprise polyethylene oxide (PEO) mixed with 10% lithium difluoromethanesulfonimide (LiTFSI). In some embodiments, the nanofibers in the thin film function as the scaffold structure in the composite layer 120 of the anode as discussed with reference to Figure 1.

Next, a lithium metal foil with an area of 38 mm × 58 mm and a thickness of 20 μm is placed on the thin film of nanofibers. A pressure of 0.1 MPa is applied to press the lithium metal foil towards the thin film of nanofibers and held for 5 seconds, to obtain a mixed composite layer (e.g., the composite layer 120, Figure 1) that has a scaffold structure supporting Li metal in the anode.

Next, an insulation layer (e.g., the insulation layer 130, Figures 1-2) comprising polypropylene (PP) is formed along the four edges of the anode current collector surrounding the composite layer as shown in Figure 2. In some embodiments, the insulation layer is 1.5 mm wide (e.g., "w" in Figure 1) and 30 μm thick. The anode including the Cu current collector, the composite layer, and the insulation layer is then placed in a drying oven at 60 °C for 1 hour.

Next, a lithium phosphorous oxynitride (LiPON) layer (e.g., as the protection layer 140, Figures 1 and 3) is deposited by magnetron sputtering to completely cover an entire surface of the anode current collector, including the composite layer, the insulation layer, and any gap between the composite layer and the insulation layer. In some embodiments, the thickness of the LiPON layer is 3 μm, and the porosity of the LiPON layer is 0.1%. A single-sided anode sheet as shown in Figure 1 can be obtained. Next, similar steps can be used to form the composite layer, the insulation layer, and the protection layer on the opposite surface of the anode current collector to obtain a double-sided anode sheet as shown in Figure 4.

### (2) Preparation of Cathode

Cathode is formed by mixing cathode active material lithium cobalt oxide ($LiCoO_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm × 58 mm dimensions to be used as cathodes (e.g., Figure 5) for lithium ion batteries.

### (3) Preparation of Electrolyte

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

### (4) Preparation of a Lithium Ion Battery

To form a lithium ion battery as shown in Figure 5, the double-sided anode (or negative electrode, as prepared in Embodiment 2 step (1)) is placed in the middle, and two single-sided cathodes (or positive electrode, as prepared in Embodiment 2 step (2)) are disposed on two opposite sides of the anode respectively. A polyethylene (PE) film with a

thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Embodiment 2 step (3) is injected into the battery. The electrolyte-soaked battery is further sealed and packaged to obtain a laminated lithium metal battery (or a laminated lithium ion battery).

**[Embodiment 3]**

**(1) Preparation of Anode**

An anode current collector (e.g., the current collector 110, Figure 1) having a dimension of 40 mm × 60 mm is made by punching or cutting from a copper metal sheet. Then, a thin film comprising nanofibers is formed in a first region of the anode current collector (e.g., as illustrated in Figure 2) using an electrospinning method. In some embodiments, the first region includes a center region of the anode current collector. In some embodiments, the thin film of nanofibers has a thickness of 80 $\mu$m, an area of 38 mm × 58 mm, and a porosity of 30%. In some embodiments, the nanofibers comprise polyethylene oxide (PEO) mixed with 10% lithium difluoromethanesulfonimide (LiTFSI). In some embodiments, the nanofibers in the thin film function as the scaffold structure in the composite layer 120 of the anode as discussed with reference to Figure 1.

Next, a lithium metal foil with an area of 38 mm × 58 mm and a thickness of 20 $\mu$m is placed on the thin film of nanofibers. A pressure of 0.1 MPa is applied to press the lithium metal foil towards the thin film of nanofibers and held for 5 seconds, to obtain a mixed composite layer (e.g., the composite layer 120, Figure 1) that has a scaffold structure supporting Li metal in the anode.

Next, an insulation layer (e.g., the insulation layer 130, Figures 1-2) comprising polypropylene (PP) is formed along the four edges of the anode current collector surrounding the composite layer as shown in Figure 2. In some embodiments, the insulation layer is 1.5 mm wide (e.g., "w" in Figure 1) and 30 $\mu$m thick. The anode including the Cu current collector, the composite layer, and the insulation layer is then placed in a drying oven at 60 °C for 1 hour.

Next, a lithium phosphorous oxynitride (LiPON) layer (e.g., as the protection layer 140, Figures 1 and 3) is deposited by magnetron sputtering to completely cover an entire surface of the anode current collector, including the composite layer, the insulation layer, and any gap between the composite layer and the insulation layer. In some embodiments, the thickness of the LiPON layer is 3 $\mu$m, and the porosity of the LiPON layer is 0.1%. A single-sided anode sheet as shown in Figure 1 can be obtained. Next, similar steps can be used to form the composite layer, the insulation layer, and the protection layer on the opposite surface of the anode current collector to obtain a double-sided anode sheet as shown in Figure 4.

**(2) Preparation of Cathode**

Cathode is formed by mixing cathode active material lithium cobalt oxide (LiCoO$_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm × 58 mm dimensions to be used as cathodes (e.g., Figure 5) for lithium ion batteries.

**(3) Preparation of Electrolyte**

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

**(4) Preparation of a Lithium Ion Battery**

To form a lithium ion battery as shown in Figure 5, the double-sided anode (or negative electrode, as prepared in Embodiment 3 step (1)) is placed in the middle, and two single-sided cathodes (or positive electrode, as prepared in Embodiment 3 step (2)) are disposed on two opposite sides of the anode respectively. A polyethylene (PE) film with a thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Embodiment 3 step (3) is injected into the battery. The electrolyte-soaked battery is further sealed and packaged to obtain a laminated lithium metal battery (or a laminated lithium ion battery).

**[Embodiment 4]**

**(1) Preparation of Anode**

An anode current collector (e.g., the current collector 110, Figure 1) having a dimension of 40 mm × 60 mm is made by punching or cutting from a copper metal sheet. Then, a carbon film comprising hollow carbon spheres is coated on a first region of the anode current collector (e.g., as illustrated in Figure 2). In some embodiments, the first region includes a center region of the anode current collector. In some embodiments, the carbon film of hollow carbon spheres has a thickness of 80 $\mu$m, an area of 38 mm × 58 mm, and a porosity of 80%. In some embodiments, the carbon film is coated from a carbon slurry comprising hollow carbon spheres and styrene butadiene rubber (SBR) at a mass ratio of 99:1. In some embodiments, the carbon film of hollow carbon spheres function as the scaffold structure in the composite layer 120 of the anode as discussed with reference to Figure 1.

Next, a lithium metal foil with an area of 38 mm × 58 mm and a thickness of 20 $\mu$m is placed on the carbon film of hollow carbon spheres. The carbon film and the lithium metal foil are placed in argon (Ar) atmosphere and heated to 300 °C. Then a pressure of 0.01 MPa is applied to press the lithium metal foil towards the carbon film and held for 1 minute, to obtain a mixed composite layer (e.g., the composite layer 120, Figure 1) that has a scaffold structure supporting Li metal in the anode.

Next, an insulation layer (e.g., the insulation layer 130, Figures 1-2) comprising polypropylene (PP) is formed along the four edges of the anode current collector surrounding the composite layer as shown in Figure 2. In some embodiments, the insulation layer is 1.5 mm wide (e.g., "w" in Figure 1) and 30 $\mu$m thick. The anode including the Cu current collector, the composite layer, and the insulation layer is then placed in a drying oven at 60 °C for 1 hour.

Next, a lithium phosphorous oxynitride (LiPON) layer (e.g., as the protection layer 140, Figures 1 and 3) is deposited by magnetron sputtering to completely cover an entire surface of the anode current collector, including the composite layer, the insulation layer, and any gap between the composite layer and the insulation layer. In some embodiments, the thickness of the LiPON layer is 3 $\mu$m, and the porosity of the LiPON layer is 0.1%. A single-sided anode sheet as shown in Figure 1 can be obtained. Next, similar steps can be used to form the composite layer, the insulation layer, and the protection layer on the opposite surface of the anode current collector to obtain a double-sided anode sheet as shown in Figure 4.

**(2) Preparation of Cathode**

Cathode is formed by mixing cathode active material lithium cobalt oxide (LiCoO$_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm × 58 mm dimensions to be used as cathodes (e.g., Figure 5) for lithium ion batteries.

**(3) Preparation of Electrolyte**

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

**(4) Preparation of a Lithium Ion Battery**

To form a lithium ion battery as shown in Figure 5, the double-sided anode (or negative electrode, as prepared in Embodiment 4 step (1)) is placed in the middle, and two single-sided cathodes (or positive electrode, as prepared in Embodiment 4 step (2)) are disposed on two opposite sides of the anode respectively. A polyethylene (PE) film with a thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Embodiment 4 step (3) is injected into the battery. The electrolyte-soaked battery is further sealed and packaged to obtain a laminated lithium metal battery (or a laminated lithium ion battery).

**[Embodiment 5]**

**(1) Preparation of Anode**

An anode current collector (e.g., the current collector 110, Figure 1) having a dimension of 40 mm $\times$ 60 mm is made by punching or cutting from a copper metal sheet. Then, a scaffold layer comprising a garnet ceramic material $Li_7La_3Zr_2O_{12}$ is coated on a first region of the anode current collector (e.g., as illustrated in Figure 2). In some embodiments, the first region includes a center region of the anode current collector. In some embodiments, the scaffold layer has a thickness of 80 $\mu$m, an area of 38 mm $\times$ 58 mm, and a porosity of 60%. In some embodiments, the scaffold layer is coated from a slurry comprising garnet ceramic material $Li_7La_3Zr_2O_{12}$ and styrene butadiene rubber (SBR) at a mass ratio of 99:1. In some embodiments, the scaffold layer has the scaffold structure in the composite layer 120 of the anode as discussed with reference to Figure 1.

Next, a lithium metal foil with an area of 38 mm $\times$ 58 mm and a thickness of 20 $\mu$m is placed on the $Li_7La_3Zr_2O_{12}$ scaffold layer. The scaffold layer and the lithium metal foil are placed in argon (Ar) atmosphere and heated to 300 °C. Then a pressure of 0.01 MPa is applied to press the lithium metal foil towards the carbon film and held for 1 minute, to obtain a mixed composite layer (e.g., the composite layer 120, Figure 1) that has a scaffold structure supporting Li metal in the anode.

Next, an insulation layer (e.g., the insulation layer 130, Figures 1-2) comprising polypropylene (PP) is formed along the four edges of the anode current collector surrounding the composite layer as shown in Figure 2. In some embodiments, the insulation layer is 1.5 mm wide (e.g., "w" in Figure 1) and 30 $\mu$m thick. The anode including the Cu current collector, the composite layer, and the insulation layer is then placed in a drying oven at 60 °C for 1 hour.

Next, a lithium phosphorous oxynitride (LiPON) layer (e.g., as the protection layer 140, Figures 1 and 3) is deposited by magnetron sputtering to completely cover an entire surface of the anode current collector, including the composite layer, the insulation layer, and any gap between the composite layer and the insulation layer. In some embodiments, the thickness of the LiPON layer is 3 $\mu$m, and the porosity of the LiPON layer is 0.1%. A single-sided anode sheet as shown in Figure 1 can be obtained. Next, similar steps can be used to form the composite layer, the insulation layer, and the protection layer on the opposite surface of the anode current collector to obtain a double-sided anode sheet as shown in Figure 4.

**(2) Preparation of Cathode**

Cathode is formed by mixing cathode active material lithium cobalt oxide ($LiCoO_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm $\times$ 58 mm dimensions to be used as cathodes (e.g., Figure 5) for lithium ion batteries.

**(3) Preparation of Electrolyte**

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

**(4) Preparation of a Lithium Ion Battery**

To form a lithium ion battery as shown in Figure 5, the double-sided anode (or negative electrode, as prepared in Embodiment 5 step (1)) is placed in the middle, and two single-sided cathodes (or positive electrode, as prepared in Embodiment 5 step (2)) are disposed on two opposite sides of the anode respectively. A polyethylene (PE) film with a thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Embodiment 5 step (3) is injected into the battery. The electrolyte-soaked battery is further sealed and packaged to obtain a laminated lithium metal battery (or a laminated lithium ion battery).

**[Embodiment 6]**

**(1) Preparation of Anode**

An anode current collector (e.g., the current collector 110, Figure 1) having a dimension of 40 mm × 60 mm is made by punching or cutting from a copper metal sheet. Then, a scaffold layer comprising a garnet ceramic material $Li_7La_3Zr_2O_{12}$ is coated on a first region of the anode current collector (e.g., as illustrated in Figure 2). In some embodiments, the first region includes a center region of the anode current collector. In some embodiments, the scaffold layer has a thickness of 80 $\mu$m, an area of 38 mm × 58 mm, and a porosity of 60%. In some embodiments, the scaffold layer is coated from a slurry comprising garnet ceramic material $Li_7La_3Zr_2O_{12}$ and styrene butadiene rubber (SBR) at a mass ratio of 99:1. In some embodiments, the scaffold layer has the scaffold structure in the composite layer 120 of the anode as discussed with reference to Figure 1.

Next, a lithium metal foil with an area of 38 mm × 58 mm and a thickness of 20 $\mu$m is placed on the $Li_7La_3Zr_2O_{12}$ scaffold layer. The scaffold layer and the lithium metal foil are placed in argon (Ar) atmosphere and heated to 300 °C. Then a pressure of 0.01 MPa is applied to press the lithium metal foil towards the carbon film and held for 1 minute, to obtain a mixed composite layer (e.g., the composite layer 120, Figure 1) that has a scaffold structure supporting Li metal in the anode.

Next, an insulation layer (e.g., the insulation layer 130, Figures 1-2) comprising polypropylene (PP) is formed along the four edges of the anode current collector surrounding the composite layer as shown in Figure 2. In some embodiments, the insulation layer is 1.5 mm wide (e.g., "w" in Figure 1) and 30 $\mu$m thick. The anode including the Cu current collector, the composite layer, and the insulation layer is then placed in a drying oven at 60 °C for 1 hour.

Next, a protection layer (e.g., the protection layer 140, Figures 1 and 3) comprising a dense polyethylene oxide (PEO) film, which is made of PEO mixed with 5% lithium difluoromethanesulfonimide (LiTFSI), is prepared on a substrate. In some embodiments, the thickness of the dense PEO protection layer is 30 $\mu$m, and the porosity is 0.1%. A surface of the anode current collector that is coated with the composite layer and the insulation layer is attached to the dense PEO protection layer, and the excessive PEO film that is bigger than the range of the composite layer and the insulation layer is trimmed off. The substrate of the PEO protection layer is removed, and a single-sided anode sheet as shown in Figure 1 can be obtained. The PEO protection layer completely covers the surface of the anode current collector that is coated with the composite layer, the insulation layer, and any gap between the composite layer and the insulation layer.

Next, similar steps can be used to form the composite layer, the insulation layer, and the dense PEO protection layer on the opposite surface of the anode current collector to obtain a double-sided anode sheet as shown in Figure 4.

**(2) Preparation of Cathode**

Cathode is formed by mixing cathode active material lithium cobalt oxide ($LiCoO_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm × 58 mm dimensions to be used as cathodes (e.g., Figure 5) for lithium ion batteries.

**(3) Preparation of Electrolyte**

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

**(4) Preparation of a Lithium Ion Battery**

To form a lithium ion battery as shown in Figure 5, the double-sided anode (or negative electrode, as prepared in Embodiment 6 step (1)) is placed in the middle, and two single-sided cathodes (or positive electrode, as prepared in Embodiment 6 step (2)) are disposed on two opposite sides of the anode respectively. A polyethylene (PE) film with a thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Embodiment 6 step (3) is injected into the battery. The electrolyte-soaked battery is further sealed and packaged to obtain a laminated lithium metal battery (or a laminated lithium ion battery).

**[Embodiment 7]**

**(1) Preparation of Anode**

An anode current collector (e.g., the current collector 110, Figure 1) having a dimension of 40 mm $\times$ 60 mm is made by punching or cutting from a copper metal sheet. Then, a scaffold layer comprising a garnet ceramic material $Li_7La_3Zr_2O_{12}$ is coated on a first region of the anode current collector (e.g., as illustrated in Figure 2). In some embodiments, the first region includes a center region of the anode current collector. In some embodiments, the scaffold layer has a thickness of 80 $\mu$m, an area of 38 mm $\times$ 58 mm, and a porosity of 60%. In some embodiments, the scaffold layer is coated from a slurry comprising garnet ceramic material $Li_7La_3Zr_2O_{12}$ and styrene butadiene rubber (SBR) at a mass ratio of 99:1. In some embodiments, the scaffold layer has the scaffold structure in the composite layer 120 of the anode as discussed with reference to Figure 1.

Next, a lithium metal foil with an area of 38 mm $\times$ 58 mm and a thickness of 20 $\mu$m is placed on the $Li_7La_3Zr_2O_{12}$ scaffold layer. The scaffold layer and the lithium metal foil are placed in argon (Ar) atmosphere and heated to 300 °C. Then a pressure of 0.01 MPa is applied to press the lithium metal foil towards the carbon film and held for 1 minute, to obtain a mixed composite layer (e.g., the composite layer 120, Figure 1) that has a scaffold structure supporting Li metal in the anode.

Next, an insulation layer (e.g., the insulation layer 130, Figures 1-2) comprising polypropylene (PP) is formed along the four edges of the anode current collector surrounding the composite layer as shown in Figure 2. In some embodiments, the insulation layer is 1.5 mm wide (e.g., "w" in Figure 1) and 30 $\mu$m thick. The anode including the Cu current collector, the composite layer, and the insulation layer is then placed in a drying oven at 60 °C for 1 hour.

Next, a protection layer (e.g., the protection layer 140, Figures 1 and 3) comprising a dense polyethylene oxide (PEO) film, which is made of PEO mixed with 5% lithium difluoromethanesulfonimide (LiTFSI), is prepared on a substrate. In some embodiments, the thickness of the dense PEO protection layer is 2 $\mu$m, and the porosity is 0.1%. A surface of the anode current collector that is coated with the scaffold composite layer (e.g., a composite layer including a scaffold structure) and the insulation layer is attached to the dense PEO protection layer, and the excessive PEO film that is bigger than the range of the composite layer and the insulation layer is trimmed off. The substrate of the PEO protection layer is then removed, and a single-sided anode sheet as shown in Figure 1 can be obtained. The PEO protection layer completely covers the surface of the anode current collector that is coated with the composite layer, the insulation layer, and any gap between the composite layer and the insulation layer.

Next, similar steps can be used to form the composite layer, the insulation layer, and the dense PEO protection layer on the opposite surface of the anode current collector to obtain a double-sided anode sheet as shown in Figure 4.

**(2) Preparation of Cathode**

Cathode is formed by mixing cathode active material lithium cobalt oxide ($LiCoO_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm $\times$ 58 mm dimensions to be used as cathodes (e.g., Figure 5) for lithium ion batteries.

**(3) Preparation of Electrolyte**

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

**(4) Preparation of a Lithium Ion Battery**

To form a lithium ion battery as shown in Figure 5, the double-sided anode (or negative electrode, as prepared in Embodiment 7 step (1)) is placed in the middle, and two single-sided cathodes (or positive electrode, as prepared in Embodiment 7 step (2)) are disposed on two opposite sides of the anode respectively. A polyethylene (PE) film with a thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Embodiment 7 step (3) is injected into the battery. The electrolyte-soaked battery is further sealed and packaged to obtain a laminated lithium metal battery (or a laminated lithium ion battery).

**[Embodiment 8]**

**(1) Preparation of Anode**

An anode current collector (e.g., the current collector 110, Figure 1) having a dimension of 40 mm × 60 mm is made by punching or cutting from a copper metal sheet. Then, a scaffold layer comprising a garnet ceramic material $Li_7La_3Zr_2O_{12}$ is coated on a first region of the anode current collector (e.g., as illustrated in Figure 2). In some embodiments, the first region includes a center region of the anode current collector. In some embodiments, the scaffold layer has a thickness of 80 $\mu$m, an area of 38 mm × 58 mm, and a porosity of 60%. In some embodiments, the scaffold layer is coated from a slurry comprising garnet ceramic material $Li_7La_3Zr_2O_{12}$ and styrene butadiene rubber (SBR) at a mass ratio of 99:1. In some embodiments, the scaffold layer has the scaffold structure in the composite layer 120 of the anode as discussed with reference to Figure 1.

Next, a lithium metal foil with an area of 38 mm × 58 mm and a thickness of 20 $\mu$m is placed on the $Li_7La_3Zr_2O_{12}$ scaffold layer. The scaffold layer and the lithium metal foil are placed in argon (Ar) atmosphere and heated to 300 °C. Then a pressure of 0.01 MPa is applied to press the lithium metal foil towards the carbon film and held for 1 minute, to obtain a mixed composite layer (e.g., the composite layer 120, Figure 1) that has a scaffold structure supporting Li metal in the anode.

Next, an insulation layer (e.g., the insulation layer 130, Figures 1-2) comprising polypropylene (PP) is formed along the four edges of the anode current collector surrounding the composite layer as shown in Figure 2. In some embodiments, the insulation layer is 1.5 mm wide (e.g., "w" in Figure 1) and 30 $\mu$m thick. The anode including the Cu current collector, the composite layer, and the insulation layer is then placed in a drying oven at 60 °C for 1 hour.

Next, a protection layer (e.g., the protection layer 140, Figures 1 and 3) comprising a dense polyethylene oxide (PEO) film, which is made of PEO mixed with 5% lithium difluoromethanesulfonimide (LiTFSI), is prepared on a substrate. In some embodiments, the thickness of the dense PEO protection layer is 0.1 $\mu$m, and the porosity is 0.1%. A surface of the anode current collector that is coated with the scaffold composite layer and the insulation layer is attached to the dense PEO protection layer, and the excessive PEO film that is bigger than the range of the composite layer and the insulation layer is trimmed off. The substrate of the PEO protection layer is then removed, and a single-sided anode sheet as shown in Figure 1 can be obtained. The PEO protection layer completely covers the surface of the anode current collector that is coated with the composite layer, the insulation layer, and any gap between the composite layer and the insulation layer.

Next, similar steps can be used to form the composite layer, the insulation layer, and the dense PEO protection layer on the opposite surface of the anode current collector to obtain a double-sided anode sheet as shown in Figure 4.

**(2) Preparation of Cathode**

Cathode is formed by mixing cathode active material lithium cobalt oxide ($LiCoO_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm × 58 mm dimensions to be used as cathodes (e.g., Figure 5) for lithium ion batteries.

**(3) Preparation of Electrolyte**

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

### (4) Preparation of a Lithium Ion Battery

To form a lithium ion battery as shown in Figure 5, the double-sided anode (or negative electrode, as prepared in Embodiment 8 step (1)) is placed in the middle, and two single-sided cathodes (or positive electrode, as prepared in Embodiment 8 step (2)) are disposed on two opposite sides of the anode respectively. A polyethylene (PE) film with a thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Embodiment 8 step (3) is injected into the battery. The electrolyte-soaked battery is further sealed and packaged to obtain a laminated lithium metal battery (or a laminated lithium ion battery).

### [Embodiment 9]

### (1) Preparation of Anode

An anode current collector (e.g., the current collector 110, Figure 1) having a dimension of 40 mm $\times$ 60 mm is made by punching or cutting from a copper metal sheet. Then, a scaffold layer comprising a garnet ceramic material $Li_7La_3Zr_2O_{12}$ is coated on a first region of the anode current collector (e.g., as illustrated in Figure 2). In some embodiments, the first region includes a center region of the anode current collector. In some embodiments, the scaffold layer has a thickness of 80 $\mu$m, an area of 38 mm $\times$ 58 mm, and a porosity of 60%. In some embodiments, the scaffold layer is coated from a slurry comprising garnet ceramic material $Li_7La_3Zr_2O_{12}$ and styrene butadiene rubber (SBR) at a mass ratio of 99: 1. In some embodiments, the scaffold layer has the scaffold structure in the composite layer 120 of the anode as discussed with reference to Figure 1.

Next, a lithium metal foil with an area of 38 mm $\times$ 58 mm and a thickness of 20 $\mu$m is placed on the $Li_7La_3Zr_2O_{12}$ scaffold layer. The scaffold layer and the lithium metal foil are placed in argon (Ar) atmosphere and heated to 300 °C. Then a pressure of 0.01 MPa is applied to press the lithium metal foil towards the carbon film and held for 1 minute, to obtain a mixed composite layer (e.g., the composite layer 120, Figure 1) that has a scaffold structure supporting Li metal in the anode.

Next, an insulation layer (e.g., the insulation layer 130, Figures 1-2) comprising polypropylene (PP) is formed along the four edges of the anode current collector surrounding the composite layer as shown in Figure 2. In some embodiments, the insulation layer is 1.5 mm wide (e.g., "w" in Figure 1) and 30 $\mu$m thick. The anode including the Cu current collector, the composite layer, and the insulation layer is then placed in a drying oven at 60 °C for 1 hour.

Next, a protection layer (e.g., the protection layer 140, Figures 1 and 3) comprising a dense polyethylene oxide (PEO) film, which is made of PEO mixed with 5% lithium difluoromethanesulfonimide (LiTFSI), is prepared on a substrate. In some embodiments, the thickness of the dense PEO protection layer is 2 $\mu$m, and the porosity is 3.3%. A surface of the anode current collector that is coated with the scaffold composite layer and the insulation layer is attached to the dense PEO protection layer, and the excessive PEO film that is bigger than the range of the composite layer and the insulation layer is trimmed off. The substrate of the PEO protection layer is then removed, and a single-sided anode sheet as shown in Figure 1 can be obtained. The PEO protection layer completely covers the surface of the anode current collector that is coated with the composite layer, the insulation layer, and any gap between the composite layer and the insulation layer.

Next, similar steps can be used to form the composite layer, the insulation layer, and the dense PEO protection layer on the opposite surface of the anode current collector to obtain a double-sided anode sheet as shown in Figure 4.

### (2) Preparation of Cathode

Cathode is formed by mixing cathode active material lithium cobalt oxide ($LiCoO_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm $\times$ 58 mm dimensions to be used as cathodes (e.g., Figure 5) for lithium ion batteries.

### (3) Preparation of Electrolyte

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

**(4) Preparation of a Lithium Ion Battery**

To form a lithium ion battery as shown in Figure 5, the double-sided anode (or negative electrode, as prepared in Embodiment 9 step (1)) is placed in the middle, and two single-sided cathodes (or positive electrode, as prepared in Embodiment 9 step (2)) are disposed on two opposite sides of the anode respectively. A polyethylene (PE) film with a thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Embodiment 9 step (3) is injected into the battery. The electrolyte-soaked battery is further sealed and packaged to obtain a laminated lithium metal battery (or a laminated lithium ion battery).

**[Controlled Experiment 1] (Anode including only Li metal foil on Cu current collector)**

**(1) Preparation of Anode**

An anode current collector having a dimension of 40 mm × 60 mm is made by punching or cutting from a copper metal sheet. A lithium metal foil with an area of 38 mm × 58 mm and a thickness of 20 $\mu$m is disposed on a first surface of the anode current collector. Next, another lithium metal foil with the same parameters (e.g., 38 mm × 58 mm and 20 $\mu$m thick) is disposed on a second surface opposite to the first surface of the anode current collector to obtain a double-sided anode.

**(2) Preparation of Cathode**

Cathode is formed by mixing cathode active material lithium cobalt oxide (LiCoO$_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm × 58 mm dimensions to be used as cathodes for lithium ion batteries.

**(3) Preparation of Electrolyte**

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

**(4) Preparation of a Lithium Ion Battery**

To form a lithium ion battery, the double-sided anode (or negative electrode, as prepared in Controlled Experiment 1 step (1)) is placed in the middle, and two single-sided cathodes (or positive electrode, as prepared in Controlled Experiment 1 step (2)) are disposed on two opposite sides of the anode respectively. A polyethylene (PE) film with a thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Controlled Experiment 1 step (3) is injected into the battery. The electrolyte-soaked battery is further sealed and packaged to obtain a laminated lithium metal battery (or a laminated lithium ion battery).

**[Controlled Experiment 2] (Anode including only scaffold composite layer on Cu current collector)**

**(1) Preparation of Anode**

An anode current collector having a dimension of 40 mm × 60 mm is made by punching or cutting from a copper metal sheet. Then, a scaffold layer comprising a garnet ceramic material $Li_7La_3Zr_2O_{12}$ is coated on a first region of the anode current collector. In some embodiments, the first region includes a center region of the anode current collector. In some embodiments, the scaffold layer has a thickness of 80 $\mu$m, an area of 38 mm × 58 mm, and a porosity of 60%. In some embodiments, the scaffold layer is coated from a slurry comprising garnet ceramic material $Li_7La_3Zr_2O_{12}$ and styrene butadiene rubber (SBR) at a mass ratio of 99: 1. In some embodiments, the scaffold layer has the scaffold structure in the composite layer 120 of the anode as discussed with reference to Figure 1.

Next, a lithium metal foil with an area of 38 mm × 58 mm and a thickness of 20 $\mu$m is placed on the $Li_7La_3Zr_2O_{12}$ scaffold layer. The scaffold layer and the lithium metal foil are placed in argon (Ar) atmosphere and heated to 300 °C. Then a pressure of 0.01 MPa is applied to press the lithium metal foil towards the carbon film and held for 1 minute, to obtain a mixed composite layer (e.g., the composite layer 120, Figure 1) that has a scaffold structure supporting Li metal in the anode.

Next, similar steps can be used to form a similar composite layer, which includes a $Li_7La_3Zr_2O_{12}$ scaffold layer supporting Li metal, on the opposite surface of the anode current collector to obtain a double-sided anode sheet.

**(2) Preparation of Cathode**

Cathode is formed by mixing cathode active material lithium cobalt oxide ($LiCoO_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm × 58 mm dimensions to be used as cathodes for lithium ion batteries.

**(3) Preparation of Electrolyte**

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

**(4) Preparation of a Lithium Ion Battery**

To form a lithium ion battery, the double-sided anode (or negative electrode, as prepared in Controlled Experiment 2 step (1)) is placed in the middle, and two single-sided cathodes (or positive electrode, as prepared in Controlled Experiment 2 step (2)) are disposed on two opposite sides of the anode respectively. A polyethylene (PE) film with a thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Controlled Experiment 2 step (3) is injected into the battery. The electrolyte-soaked battery is further sealed and packaged to obtain a laminated lithium metal battery (or a laminated lithium ion battery).

**[Controlled Experiment 3] (Anode including scaffold composite layer and protection layer on Cu current collector)**

**(1) Preparation of Anode**

An anode current collector having a dimension of 40 mm × 60 mm is made by punching or cutting from a copper metal sheet. Then, a scaffold layer comprising a garnet ceramic material $Li_7La_3Zr_2O_{12}$ is coated on a first region of the anode current collector. In some embodiments, the first region includes a center region of the anode current collector. In some embodiments, the scaffold layer has a thickness of 80 $\mu$m, an area of 38 mm × 58 mm, and a porosity of 60%. In some embodiments, the scaffold layer is coated from a slurry comprising garnet ceramic material $Li_7La_3Zr_2O_{12}$ and styrene butadiene rubber (SBR) at a mass ratio of 99: 1. In some embodiments, the scaffold layer has the scaffold structure in the composite layer 120 of the anode as discussed with reference to Figure 1.

Next, a lithium metal foil with an area of 38 mm × 58 mm and a thickness of 20 $\mu$m is placed on the $Li_7La_3Zr_2O_{12}$ scaffold layer. The scaffold layer and the lithium metal foil are placed in argon (Ar) atmosphere and heated to 300 °C. Then a pressure of 0.01 MPa is applied to press the lithium metal foil towards the carbon film and held for 1 minute, to obtain a mixed composite layer (e.g., the composite layer 120, Figure 1) that has a scaffold structure supporting Li metal in the anode.

Next, a protection layer (e.g., the protection layer 140, Figures 1 and 3) comprising a dense polyethylene oxide (PEO) film, which is made of PEO mixed with 5% lithium difluoromethanesulfonimide (LiTFSI), is prepared on a substrate. In some embodiments, the thickness of the dense PEO protection layer is 20 $\mu$m, and the porosity is 0.1%. A surface of the anode current collector that is coated with the scaffold composite layer is attached to the dense PEO protection layer, and the excessive PEO film that is bigger than the range of the composite layer is trimmed off. The substrate of the PEO protection layer is then removed, and a single-sided anode sheet can be obtained. The PEO protection layer completely covers the surface of the anode current collector that is coated with the composite layer.

Next, similar steps can be used to form the composite layer and the dense PEO protection layer on the opposite surface of the anode current collector to obtain a double-sided anode sheet.

## (2) Preparation of Cathode

Cathode is formed by mixing cathode active material lithium cobalt oxide (LiCoO$_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm $\times$ 58 mm dimensions to be used as cathodes for lithium ion batteries.

## (3) Preparation of Electrolyte

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

## (4) Preparation of a Lithium Ion Battery

To form a lithium ion battery, the double-sided anode (or negative electrode, as prepared in Controlled Experiment 3 step (1)) is placed in the middle, and two single-sided cathodes (or positive electrode, as prepared in Controlled Experiment 3 step (2)) are disposed on two opposite sides of the anode respectively. A polyethylene (PE) film with a thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Controlled Experiment 3 step (3) is injected into the battery. The electrolyte-soaked battery is further sealed and packaged to obtain a laminated lithium metal battery (or a laminated lithium ion battery).

## [Controlled Experiment 4] (Anode including scaffold composite layer, insulation layer, and protection layer having high porosity on Cu current collector)

## (1) Preparation of Anode

An anode current collector (e.g., the current collector 110, Figure 1) having a dimension of 40 mm $\times$ 60 mm is made by punching or cutting from a copper metal sheet. Then, a scaffold layer comprising a garnet ceramic material Li$_7$La$_3$Zr$_2$O$_{12}$ is coated on a first region of the anode current collector (e.g., as illustrated in Figure 2). In some embodiments, the first region includes a center region of the anode current collector. In some embodiments, the scaffold layer has a thickness of 80 $\mu$m, an area of 38 mm $\times$ 58 mm, and a porosity of 60%. In some embodiments, the scaffold layer is coated from a slurry comprising garnet ceramic material Li$_7$La$_3$Zr$_2$O$_{12}$ and styrene butadiene rubber (SBR) at a mass ratio of 99: 1. In some embodiments, the scaffold layer has the scaffold structure in the composite layer 120 of the anode as discussed with reference to Figure 1.

Next, a lithium metal foil with an area of 38 mm $\times$ 58 mm and a thickness of 20 $\mu$m is placed on the Li$_7$La$_3$Zr$_2$O$_{12}$ scaffold layer. The scaffold layer and the lithium metal foil are placed in argon (Ar) atmosphere and heated to 300 °C. Then a pressure of 0.01 MPa is applied to press the lithium metal foil towards the carbon film and held for 1 minute, to obtain a mixed composite layer (e.g., the composite layer 120, Figure 1) that has a scaffold structure supporting Li metal in the anode.

Next, an insulation layer (e.g., the insulation layer 130, Figures 1-2) comprising polypropylene (PP) is formed

EP 3 896 757 B1

along the four edges of the anode current collector surrounding the composite layer as shown in Figure 2. In some embodiments, the insulation layer is 1.5 mm wide (e.g., "w" in Figure 1) and 30 $\mu$m thick. The anode including the Cu current collector, the composite layer, and the insulation layer is then placed in a drying oven at 60 °C for 1 hour.

Next, a protection layer (e.g., the protection layer 140, Figures 1 and 3) comprising a polyethylene oxide (PEO) film, which is made of PEO mixed with 5% lithium difluoromethanesulfonimide (LiTFSI), is prepared on a substrate. In some embodiments, the thickness of the PEO protection layer is 2 $\mu$m, and the porosity is 15.1%. A surface of the anode current collector that is coated with the scaffold composite layer and the insulation layer is attached to the PEO protection layer, and the excessive PEO film that is bigger than the range of the composite layer and the insulation layer is trimmed off. The substrate of the PEO protection layer is then removed, and a single-sided anode sheet as shown in Figure 1 can be obtained. The PEO protection layer completely covers the surface of the anode current collector that is coated with the composite layer, the insulation layer, and any gap between the composite layer and the insulation layer.

Next, similar steps can be used to form the composite layer, the insulation layer, and the PEO protection layer on the opposite surface of the anode current collector to obtain a double-sided anode sheet as shown in Figure 4.

## (2) Preparation of Cathode

Cathode is formed by mixing cathode active material lithium cobalt oxide ($LiCoO_2$), carbon conductive additive carbon black, and binders polyvinylidene fluoride (PVDF) according to a weight ratio of 97.5 : 1.0 : 1.5. Solvent N-methylpyrrolidone (NMP) is added to homogeneously mix the powers to form a cathode slurry with a solid content of 75%. The cathode slurry is then homogeneously coated on an aluminum metal foil, and then baked-dry at 90 °C to obtain a cathode sheet. Then the cathode sheet is cut into 38 mm × 58 mm dimensions to be used as cathodes (e.g., Figure 5) for lithium ion batteries.

## (3) Preparation of Electrolyte

In a dry argon (Ar) atmosphere, the organic solvent ethylene carbonate (EC), ethyl methyl carbonate (EMC), and diethyl carbonate (DEC) are mixed at a mass ratio of EC:EMC:DEC=30:50:20. Then a lithium salt lithium hexafluorophosphate (LiPF6) is added into the mixed organic solvent until completely dissolved and uniformly mixed to obtain an electrolytic solution having the lithium salt concentration of 1.15 M (mol/L).

## (4) Preparation of a Lithium Ion Battery

To form a lithium ion battery as shown in Figure 5, the double-sided anode (or negative electrode, as prepared in Controlled Experiment 4 step (1)) is placed in the middle, and two single-sided cathodes (or positive electrode, as prepared in Controlled Experiment 4 step (2)) are disposed on two opposite sides of the anode respectively. A polyethylene (PE) film with a thickness of 15 $\mu$m is used as a respective separator disposed between each pair of the cathode and anode.

After stacking one or more pairs of cathode and anode, the four corners of the entire laminated structure are fixed by tape, and the laminated structure is placed in an aluminum plastic film. The aluminum film is then partially sealed from one or more sides, and electrolyte as prepared in Controlled Experiment 4 step (3) is injected into the battery. The electrolyte-soaked battery is further sealed and packaged to obtain a laminated lithium metal battery (or a laminated lithium ion battery).

## [Tests of Lithium Ion Batteries Made From the Above nine Embodiments and four Controlled Experiments]

Lithium ion batteries prepared from the above nine Embodiments and four Controlled Experiments respectively were tested for (1) the changes of the anode thickness from before and after charging the lithium ion batteries to 4.2 V, and (2) the electrochemical performance, e.g., charge and discharge capacities, of the lithium ion battery.

To test the anode thickness change, first, an uncharged lithium ion battery prepared using a respective condition is disassembled, and the anode is removed and dried. A micrometer is used to measure the original thickness (D1) of the dried anode before charging.

Then, a lithium ion battery prepared using the same condition is charged to 4.2 V, and then disassembled. The charged anode is removed and dried. A micrometer is used to measure the thickness (D2) of the dried charged anode after charging.

The thickness increasing rate ($\Delta t$ %) is determined by:

$$\Delta t\ \% = \left( \frac{D2 - Cu2}{D1 - Cu1} - 1 \right) * 100\%$$

where Cu1 is the thickness of the copper current collector of the anode having the original thickness D1 in the lithium ion battery before charging, and Cu2 is the thickness of the copper current collector of the charged anode having the thickness D2 in the lithium ion battery after charging.

To test the charge and discharge capacities the lithium ion batteries prepared under different conditions, the batteries are tested between 3.7 V and 4.2 V, i.e., charged to 4.2 V and discharged to 3.7 V, at a current density of 0.15 $mA/cm^2$.

The test results of the lithium ion batteries from the above nine Embodiments (Embt.) and four Controlled Experiments (C.E.) are listed in Table 1 below.

| | Scaffold Layer Material | Scaffold Layer Porosity (%) | Protection Layer Material | Protection Layer Porosity | Protection Layer Thickness ($\mu$m) | Thickness Increase Rate After charging to 4.2 V | Discharge Capacity after 30th Cycle / Discharge Capacity after 1st Cycle |
|---|---|---|---|---|---|---|---|
| C.E.1 | None | None | None | None | None | 105% | 75% |
| C.E.2 | $Li_7La_3Zr_2O_{12}$ | 60 | None | None | None | 33% | 0 |
| C.E.3 | $Li_7La_3Zr_2O_{12}$ | 60 | PEO | 0.1% | 20 | 6% | 55% |
| C.E.4 | $Li_7La_3Zr_2O_{12}$ | 60 | PEO | 15.1% | 2 | 5% | 0% |
| Embt. 1 | PEO fiber | 85 | LiPON | 0.1% | 3 | 4% | 98% |
| Embt. 2 | PEO fiber | 60 | LiPON | 0.1% | 3 | 4% | 98% |
| Embt. 3 | PEO fiber | 30 | LiPON | 0.1% | 3 | 2% | 98% |
| Embt. 4 | Hollow C Spheres | 80 | LiPON | 0.1% | 3 | 3% | 98% |
| Embt. 5 | $Li_7La_3Zr_2O_{12}$ | 60 | LiPON | 0.1% | 3 | 2% | 98% |
| Embt. 6 | $Li_7La_3Zr_2O_{12}$ | 60 | PEO | 0.1% | 30 | 2% | 97% |
| Embt. 7 | $Li_7La_3Zr_2O_{12}$ | 60 | PEO | 0.1% | 2 | 5% | 97% |
| Embt. 8 | $Li_7La_3Zr_2O_{12}$ | 60 | PEO | 0.1% | 0.1 | 11% | 21% |
| Embt. 9 | $Li_7La_3Zr_2O_{12}$ | 60 | PEO | 3.3% | 2 | 5% | 92% |

The porosities were determined based on 10 parallel samples prepared under a respective condition. Each sample is tested using a scanning electron microscope (SEM), to determine the pore distribution within a 1 mm $\times$ 1 mm area. In particular, the porosity is determined to be the percentage of the area taken by the pores (i.e., the void areas without any materials) in the total area (i.e., 1 mm $\times$ 1 mm area). The result is a valid number after the decimal point. When the number is less than 0.1%, it is recorded as 0.1%.

As shown in Table 1, the scaffold layer can preserve and support space for Li deposition after charging the lithium ion battery, so that the anode thickness does not increase drastically after charging the lithium ion battery. In particular, the scaffold layer has a porosity between 30 % and 85 %, and the ionic conductivity of the scaffold material is in a range from $10^{-2}$ to $10^{-8}$ S/cm. When the scaffold layer comprises the same material, the scaffold layer having a higher porosity has a weaker scaffold structure, which in turn has a weaker ability to confine thickness change of lithium metal, resulting in higher anode thickness increase rate after charging the battery. For example, PEO nanofiber scaffold with 85% porosity in Embodiment 1 has a bigger thickness increase than PEO nanofiber scaffold with 30% porosity in Embodiment 3.

In some embodiments, the insulation layer has a thickness in a range from 5 $\mu$m to 60 $\mu$m, and a width in a range from 0.5 mm to 10 mm. The material in the insulation layer does not conduct electrons or ions, and has a resistivity bigger than $10^7$ $\Omega{\cdot}$m, preferably bigger than $10^{10}$ $\Omega{\cdot}$m.

The insulation layer in the composite anode as disclosed in the present application is configured to confine the Li$^+$ ions diffusion and Li$^+$ ions reduction/oxidation within a range defined by the insulation layer. This is because the insulation layer can effectively prevent direct contact between the current collector and the protection layer, so that electrons conducted within the current collector cannot directly contact or react with (e.g., reduce) Li$^+$ ions diffused within the protection layer. Therefore, the insulation layer can confine the reduction of Li$^+$ ions to Li metal to take place only in the composite layer. As an example demonstrated in the Controlled Experiment 3, when a lithium ion battery does not include an insulation layer in the anode, Li metal may be deposited on the cross-sectional edges of the battery, on the protection layer, and even beyond the region covered by the protection layer, which may significantly reduce the capacity retention (i.e., the discharge capacity after 30th cycle / discharge capacity after 1st cycle dropped to 55%).

In some embodiments, the protection layer has a thickness in a range from 0.1 $\mu$m to 30 $\mu$m, a porosity less than 5%, and a pore size smaller than 1 $\mu$m. In some embodiments, the material of the protection layer is capable of conducting ions, and has an ionic conductivity in a range from $10^{-2}$ to $10^{-8}$ S/cm.

The protection layer as discussed in the present disclosure can effectively block or significantly reduce the passage of electrolyte into the composite layer of the anode, so as to reduce the contact between lithium metal anode and electrolyte to avoid side reactions and increase the coulombic efficiency of the battery. The capacity retention can be significantly improved in a battery having a protection layer in the anode. For example, for the lithium ion battery having no protection layer in Controlled Experiment 2, after charging and discharging the battery for 30 cycles, essentially the battery has no capacity left.

The porosity and thickness of the protection layer are important to the performance of the lithium ion battery. For example, when the protection layer has sufficiently small porosity and pore size, the organic molecules in electrolyte cannot penetrate the protection layer to get in contact with the lithium metal, thus effectively avoiding side reactions between the electrolyte and the lithium metal, and improving capacity retention after charging and discharging the lithium ion battery for many cycles.

On the other hand, even if a battery includes a protection layer, when the porosity of the protection layer is too big, the electrolyte and the organic molecules can freely pass through the protection layer to react with the Li metal in the composite layer, thus significantly reducing the battery capacity retention. For example, for the lithium ion battery having a protection layer with a high porosity of 15.1% in Controlled Experiment 4, after charging and discharging the battery for 30 cycles, essentially the battery has no capacity left.

When the protection layer uses the same material, a thicker protection layer can effectively prevent electrolyte penetration and inhibit dendrite growth, thus providing a better strength and mechanical integrity after charging and discharging the battery for many cycles. However, Li$^+$ ionic conductivity (or the ionic conductance) of the protection layer may decrease due to the increased thickness, which may increase battery polarization and reduce the battery performance. Thus a protection layer with a suitable thickness range, e.g., 0.1 $\mu$m to 30 $\mu$m, is beneficial to lithium ion battery for at least these reasons discussed herein.

**Claims**

1. An electrode (100) for a battery, comprising:

   a current collector (110) having a first surface; **characterized in that**,
   a composite layer (120) is disposed in a first region on the first surface of the current collector (110), the composite layer (120) including a first material with a scaffold structure and a second material mixed with the scaffold structure, wherein the second material includes an electrochemically active material for the battery;
   an insulation layer (130) is disposed in a second region surrounding the first region on the first surface of the current collector (110); and
   a protection layer (140) covers the composite layer (120) and the insulation layer (130) on the first surface of the current collector (110), wherein
   the insulation layer (130) covers any place on the first surface of the current collector (110) that is not covered by the composite layer (120).

2. The electrode (100) according to claim 1, wherein the electrode (100) is an anode of the battery.

3. The electrode (100) according to claim 1 or 2, wherein the first material has a porosity in a range from 30% to 85%.

4. The electrode (100) according to any one of claims 1 to 3, wherein the first material has an ionic conductivity in a range from $10^{-2}$ S/cm to $10^{-8}$ S/cm.

5. The electrode (100) according to any one of claims 1 to 4, wherein the insulation layer (130) has a width in a range from 0.5 mm to 10 mm.

6. The electrode (100) according to any one of claims 1 to 5, wherein the insulation layer (130) has a thickness in a range from 5 $\mu$m to 60 $\mu$m.

7. The electrode (100) according to any one of claims 1 to 6, wherein the insulation layer (130) comprises a material with a resistivity in a range from $10^{10}$ $\Omega$•m to $10^{22}$ $\Omega$•m.

8. The electrode (100) according to any one of claims 1 to 7, wherein the protection layer (140) has a porosity below 5%.

9. The electrode (100) according to any one of claims 1 to 8, wherein the protection layer (140) has a pore size below 1 $\mu$m.

10. The electrode (100) according to any one of claims 1 to 9, wherein the protection layer (140) has a thickness in a range from 0.1 $\mu$m to 30 $\mu$m.

11. The electrode (100) according to any one of claims 1 to 10, wherein the protection layer (140) comprises a material with an ionic conductivity in a range from $10^{-2}$ S/cm to $10^{-8}$ S/cm.

12. A battery, **characterized in that**, the battery comprising the electrode (100) according to any one of claims 1 to 11.

**Patentansprüche**

1. Elektrode (100) für eine Batterie, umfassend:

einen Stromkollektor (110) mit einer ersten Oberfläche; **dadurch gekennzeichnet, dass**,
eine Verbundschicht (120) in einem ersten Bereich auf der ersten Oberfläche des Stromkollektors (110) angeordnet ist, wobei die Verbundschicht (120) ein erstes Material mit einer Gerüststruktur und ein zweites Material, das mit der Gerüststruktur gemischt ist, enthält, wobei das zweite Material ein elektrochemisch aktives Material für die Batterie enthält;
eine Isolierschicht (130), die in einem zweiten Bereich angeordnet ist, der den ersten Bereich auf der ersten Oberfläche des Stromkollektors (110) umgibt; und
eine Schutzschicht (140), die die Verbundschicht (120) und die Isolierschicht (130) auf der ersten Oberfläche des Stromkollektors (110) bedeckt, wobei
die Isolierschicht (130) jede Stelle auf der ersten Oberfläche des Stromkollektors (110) bedeckt, die nicht von der Verbundschicht (120) bedeckt ist.

2. Elektrode (100) nach Anspruch 1, wobei die Elektrode (100) eine Anode der Batterie ist.

3. Elektrode (100) nach Anspruch 1 oder 2, wobei das erste Material eine Porosität in einem Bereich von 30 % bis 85 % aufweist.

4. Elektrode (100) nach einem der Ansprüche 1 bis 3, wobei das erste Material eine Ionenleitfähigkeit im Bereich von $10^{-2}$ S/cm bis $10^{-8}$ S/cm aufweist.

5. Elektrode (100) nach einem der Ansprüche 1 bis 4, wobei die Isolierschicht (130) eine Breite im Bereich von 0,5 mm bis 10 mm aufweist.

6. Elektrode (100) nach einem der Ansprüche 1 bis 5, wobei die Isolierschicht (130) eine Dicke in einem Bereich von 5 $\mu$m bis 60 $\mu$m aufweist.

7. Elektrode (100) nach einem der Ansprüche 1 bis 6, wobei die Isolierschicht (130) ein Material mit einem Widerstand im Bereich von $10^{10}$ $\Omega$·m bis $10^{22}$ $\Omega$·m umfasst.

**8.** Elektrode (100) nach einem der Ansprüche 1 bis 7, wobei die Schutzschicht (140) eine Porosität von weniger als 5% aufweist.

**9.** Elektrode (100) nach einem der Ansprüche 1 bis 8, wobei die Schutzschicht (140) eine Porengröße unter 1 $\mu$m aufweist.

**10.** Elektrode (100) nach einem der Ansprüche 1 bis 9, wobei die Schutzschicht (140) eine Dicke in einem Bereich von 0,1 $\mu$m bis 30 $\mu$m aufweist.

**11.** Elektrode (100) nach einem der Ansprüche 1 bis 10, wobei die Schutzschicht (140) ein Material mit einer Ionenleitfähigkeit in einem Bereich von $10^{-2}$ S/cm bis $10^{-8}$ S/cm umfasst.

**12.** Batterie, **dadurch gekennzeichnet, dass** die Batterie die Elektrode (100) nach einem der Ansprüche 1 bis 11 umfasst.

**Revendications**

**1.** Électrode (100) pour une batterie, comprenant :

un collecteur de courant (110) comportant une première surface ;
**caractérisée en ce que** :

une couche composite (120) est disposée dans une première région sur la première surface du collecteur de courant (110), la couche composite (120) incluant un premier matériau présentant une structure de support et un second matériau mélangé avec la structure de support, dans laquelle le second matériau inclut un matériau électro-chimiquement actif pour la batterie ;
une couche isolante (130) est disposée dans une seconde région qui entoure la première région sur la première surface du collecteur de courant (110) ; et
une couche de protection (140) recouvre la couche composite (120) et la couche isolante (130) sur la première surface du collecteur de courant (110), dans laquelle
la couche isolante (130) recouvre tout endroit sur la première surface du collecteur de courant (110) qui n'est pas recouvert par la couche composite (120).

**2.** Électrode (100) selon la revendication 1, dans laquelle l'électrode (100) est une anode de la batterie.

**3.** Électrode (100) selon la revendication 1 ou 2, dans laquelle le premier matériau présente une porosité dans une plage de 30 % à 85 %.

**4.** Électrode (100) selon l'une quelconque des revendications 1 à 3, dans laquelle le premier matériau présente une conductivité ionique dans une plage de $10^{-2}$ S/cm à $10^{-8}$ S/cm.

**5.** Électrode (100) selon l'une quelconque des revendications 1 à 4, dans laquelle la couche isolante (130) présente une largeur dans une plage de 0,5 mm à 10 mm.

**6.** Électrode (100) selon l'une quelconque des revendications 1 à 5, dans laquelle la couche isolante (130) présente une épaisseur dans une plage de 5 $\mu$m à 60 $\mu$m.

**7.** Électrode (100) selon l'une quelconque des revendications 1 à 6, dans laquelle la couche isolante (130) comprend un matériau présentant une résistivité dans une plage de $10^{10}$ $\Omega$.m à $10^{22}$ $\Omega$.m.

**8.** Électrode (100) selon l'une quelconque des revendications 1 à 7, dans laquelle la couche de protection (140) présente une porosité inférieure à 5 %.

**9.** Électrode (100) selon l'une quelconque des revendications 1 à 8, dans laquelle la couche de protection (140) présente une taille de pore inférieure à 1 $\mu$m.

**10.** Électrode (100) selon l'une quelconque des revendications 1 à 9, dans laquelle la couche de protection (140) présente une épaisseur dans une plage de 0,1 $\mu$m à 30 $\mu$m.

**11.** Électrode (100) selon l'une quelconque des revendications 1 à 10, dans laquelle la couche de protection (140) comprend un matériau présentant une conductivité ionique dans une plage de $10^{-2}$ S/cm à $10^{-8}$ S/cm.

**12.** Batterie, **caractérisée en ce que** la batterie comprend l'électrode (100) selon l'une quelconque des revendications 1 à 11.

**100**

t3    t1    140

120

w    t2

130

110

Y

X

Fig. 1

**100**

150

130

120

d1

d2

Fig. 2

**100**

150

140

Fig. 3

**200**

140

120

130
110
170

160
180

Fig. 4

Fig. 5

**EP 3 896 757 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015108488 A1

- CN 103700807 A